(19) Europäisches Patentamt
European Patent Office
Office européen des brevets

(11) **EP 4 321 954 A2**

(12) **DEMANDE DE BREVET EUROPEEN**

(43) Date de publication:
**14.02.2024 Bulletin 2024/07**

(51) Classification Internationale des Brevets (IPC):
***G05D 1/00*** *(2024.01)*

(21) Numéro de dépôt: **23219438.1**

(22) Date de dépôt: **02.02.2022**

(52) Classification Coopérative des Brevets (CPC):
**G05D 1/0094; G05D 1/0088;** B64U 10/25;
B64U 2101/31; B64U 2201/10

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.02.2021 FR 2101143**

(62) Numéro(s) de document de la (des) demande(s) initiale(s) en application de l'article 76 CBE:
**22706522.4 / 4 288 847**

(71) Demandeur: **THALES**
**92190 Meudon (FR)**

(72) Inventeurs:
• **DESCUDE, Sébastien**
**31100 TOULOUSE (FR)**

• **SANNINO, Christian**
**31100 TOULOUSE (FR)**
• **BORONAT, Hugo**
**31100 TOULOUSE (FR)**

(74) Mandataire: **Atout PI Laplace**
**Immeuble "Visium"**
**22, avenue Aristide Briand**
**94117 Arcueil Cedex (FR)**

Remarques:
Cette demande a été déposée le 21-12-2023 comme demande divisionnaire de la demande mentionnée sous le code INID 62.

(54) **PROCÉDÉ ET DISPOSITIF DE GUIDAGE AUTOMATIQUE D'UN AÉRONEF AUTONOME**

(57) Les modes de réalisation de l'invention fournissent un procédé de guidage d'un aéronef autonome (100), l'aéronef comprenant un pilote automatique (102), une pluralité de capteurs et une unité d'imagerie (101), l'aéronef étant configuré pour survoler une zone géographique comprenant des zones interdites au survol (20), le procédé de guidage peut avantageusement comprendre une phase de vol réel de l'aéronef autonome (100), en utilisant une loi de guidage donnée, comprenant les étapes suivantes :
- déterminer (701) un état courant de l'aéronef autonome (100) ;
- déterminer (702) une action optimale à exécuter en utilisant un réseau de neurones (500) recevant l'état courant ;
- déterminer (703) une pluralité de consignes de commande compatibles avec la loi de guidage à partir de l'action optimale à exécuter ;
- transmettre (704) au pilote automatique (102) la pluralité de consignes de commande, ce qui fournit un nouvel état de l'aéronef autonome (100).

Figure 7

déterminer un état courant de l'aéronef autonome — 701

déterminer une action optimale à exécuter en utilisant un réseau de neurones — 702

déterminer une pluralité de consignes de commande à partir de l'action optimale à exécuter — 703

transmettre au pilote automatique les consignes de commande — 704

Figure 7

EP 4 321 954 A2

**Description**

Art antérieur

L'invention concerne généralement les aéronefs, et en particulier un procédé et un dispositif de guidage automatique d'un aéronef autonome.

Dans le domaine de la surveillance d'objets, il est connu d'utiliser des systèmes de surveillance aéroportés utilisant un aéronef équipé d'une unité d'imagerie pour surveiller des objets d'intérêt en réalisant des prises de vues aériennes. L'aéronef peut être par exemple un aéronef de type drone multi-rotors. L'unité d'imagerie peut être orientable pour photographier des objets d'intérêt qui peuvent se trouver dans des zones interdites au survol. L'aéronef et l'unité d'imagerie doivent être positionnés selon un angle précis afin de pouvoir photographier un objet d'intérêt donné. Cependant, de telles solutions présentent des coûts de déploiement importants et une forte consommation en énergie. Par ailleurs, les vibrations provoquées par les moteurs du drone multi-rotors et subies par l'unité d'imagerie sont élevées. De tels inconvénients écourtent considérablement la durée de vol du drone et dégradent de manière significative la qualité des images acquises.

D'autres solutions ont été proposées pour assurer le guidage automatique d'un aéronef autonome. Généralement, la zone de survol considérée n'est pas contraignante dans le sens où il n'y pas de zones interdites au survol des aéronefs. Les dispositifs de guidage existants appliquent des lois de guidage reposant sur des problèmes d'optimisation pour déterminer le chemin le plus court qui permet de passer par un nombre donné d'objets d'intérêt préalablement identifiés. Toutefois, de telles lois de guidage ne permettent pas d'anticiper la prise de cap par l'aéronef pour se situer dans le champ de l'objet d'intérêt à photographier. Une solution de ce type est décrite par exemple dans le Brevet EP2403757 « Unmanned air vehicle (UAV), control system and method ». Cependant, elle ne permet pas d'anticiper la prise de cap vers un objet d'intérêt. Un autre exemple de système de surveillance aéroporté est proposé dans le document US 2009/157233 A1.

Il existe ainsi un besoin pour un procédé et un dispositif de guidage améliorés destinés aux aéronefs autonomes.

Définition générale de l'invention

A cet effet, la présente invention fournit un procédé de guidage d'un aéronef autonome, l'aéronef comprenant un pilote automatique, une pluralité de capteurs et une unité d'imagerie, l'aéronef étant configuré pour survoler une zone géographique comprenant des zones interdites au survol et un couloir de sécurité ne traversant pas les zones interdites au survol, l'unité d'imagerie étant apte à photographier un ou plusieurs objets d'intérêt se trouvant dans la zone géographique. Avantageusement, le procédé de guidage comprend une phase de vol réel de l'aéronef autonome entre une position de départ et une position d'arrivée prédéfinie associées au couloir de sécurité, en utilisant une loi de guidage donnée, le procédé de guidage comprenant les étapes suivantes, mises en oeuvre à un instant donné de la phase de vol réel :

- déterminer un état courant de l'aéronef autonome en fonction d'une pluralité de paramètres d'entrée comprenant des paramètres d'entrée fournis par la pluralité de capteurs ;

- déterminer une action optimale à exécuter en utilisant un réseau de neurones recevant l'état courant ;

- déterminer une pluralité de consignes de commande compatibles avec la loi de guidage à partir de l'action optimale à exécuter ;

- transmettre au pilote automatique la pluralité de consignes de commande, ce qui fournit un nouvel état de l'aéronef autonome.

Le réseau de neurones représente une fonction de valeur, la fonction de valeur associant à chaque état courant une ou plusieurs actions, chacune des actions étant associées à une valeur d'action représentative d'une somme attendue de paramètres de récompense, la action optimale à exécuter étant associée à une valeur d'action maximale, les paramètres de récompense étant maximaux si le nouvel état correspond à :

- un état indiquant que l'aéronef autonome reste dans le couloir de sécurité ;

- un état indiquant que l'unité d'imagerie photographie au moins un objet d'intérêt ;

- un état où l'aéronef autonome atteint une position d'arrivée prédéfinie.

Les paramètres de récompense sont minimaux si le nouvel état correspond à un état indiquant une sortie de l'aéronef autonome du couloir de sécurité, le procédé comprend en outre une phase préalable d'apprentissage consistant à optimiser le réseau de neurones à partir d'une pluralité de vols fictifs de l'aéronef, chacun des vols fictifs comprenant une succession d'étapes fictives.

Dans un mode de réalisation, le procédé de guidage peut en outre comprendre une étape supplémentaire consistant à transmettre à l'unité d'imagerie des consignes de prise de vue photographique, si le nouvel état permet de photographier au moins un objet d'intérêt.

Alternativement, le réseau de neurones peut représenter une stratégie associant à chaque état courant de l'aéronef autonome une action optimale à exécuter.

Avantageusement, l'optimisation du réseau de neurones à partir de la pluralité de vols fictifs peut être déterminée en utilisant un algorithme d'apprentissage machine par renforcement.

En variante, le réseau de neurones peut comprendre une couche d'entrée formée par une pluralité de neurones d'entrée, au moins un des neurones d'entrée recevant une information fournie par un des capteurs.

Optionnellement, chacun des vols fictifs peut être associé à un paramètre de complexité, les vols fictifs étant utilisés dans la phase préalable d'apprentissage selon un ordre croissant des paramètres de complexité.

Dans un autre mode de réalisation, la loi de guidage peut être une loi parmi :

- une loi de capture et de tenue de cap, par action sur des gouvernes des ailerons de l'aéronef autonome ;

- une loi de capture et de tenue de route par action sur des gouvernes des ailerons de l'aéronef autonome ;

- une loi de capture et de tenue d'altitude par action sur la poussée du moteur ou sur des gouvernes de profondeur de l'aéronef autonome ;

- une loi de capture et de tenue de vitesse par action sur la poussée du moteur de l'aéronef autonome.

Il est en outre proposé un dispositif de guidage mis en oeuvre dans un aéronef autonome, l'aéronef comprenant un pilote automatique, une pluralité de capteurs et une unité d'imagerie, l'aéronef étant configuré pour survoler une zone géographique comprenant des zones interdites au survol et un couloir de sécurité ne traversant pas les zones interdites au survol, l'unité d'imagerie étant apte à photographier un ou plusieurs objets d'intérêt se trouvant dans la zone géographique. Avantageusement, le dispositif de guidage comprend :

- une première unité apte à déterminer un état courant de l'aéronef autonome en fonction d'une pluralité de paramètres d'entrée comprenant des paramètres d'entrée fournis par la pluralité de capteurs ;

- une deuxième unité apte à déterminer une action optimale à exécuter en utilisant un réseau de neurones recevant l'état courant ;

- une troisième unité apte à déterminer une pluralité de consignes de commande compatibles avec la loi de guidage à partir de l'action optimale à exécuter ;

- une quatrième unité apte à transmettre au pilote automatique la pluralité de consignes de commande, ce qui fournit un nouvel état de l'aéronef autonome.

Le réseau de neurones représente une fonction de valeur, la fonction de valeur associant à chaque état courant une ou plusieurs actions, chacune des actions étant associées à une valeur d'action représentative d'une somme attendue de paramètres de récompense, la action optimale à exécuter étant associée à une valeur d'action maximale, les paramètres de récompense étant maximaux si le nouvel état correspond à :

- un état indiquant que l'aéronef autonome reste dans le couloir de sécurité ;

- un état indiquant que l'unité d'imagerie photographie au moins un objet d'intérêt ;

- un état où l'aéronef autonome atteint une position d'arrivée prédéfinie.

Les paramètres de récompense sont minimaux si le nouvel état correspond à un état indiquant une sortie de l'aéronef autonome du couloir de sécurité, le dispositif de guidage étant en outre configuré pour mettre en oeuvre une phase préalable d'apprentissage pour optimiser le réseau de neurones à partir d'une pluralité de vols fictifs de l'aéronef, chacun des vols fictifs comprenant une succession d'étapes fictives.

Dans un mode de réalisation, le dispositif de guidage peut en outre comprendre une cinquième unité apte à transmettre à l'unité d'imagerie des consignes de prise de vue photographique.

L'invention a également pour objet un aéronef autonome comprenant le dispositif de guidage précédemment décrit.

Brève description des figures

D'autres caractéristiques et avantages de l'invention apparaîtront à l'aide de la description qui suit et des figures dans lesquels :

[Fig. 1] représente un système de surveillance, selon un mode de réalisation de l'invention ;

[Fig. 2] représente un aéronef autonome à voilure fixe, selon un mode de réalisation de l'invention ;

[Fig. 3] illustre l'interaction entre l'aéronef autonome et son environnement, selon un mode de réalisation de l'invention ;

[Fig.4] illustre un exemple d'environnements dans lequel l'aéronef autonome peut évoluer, selon un mode de réalisation de l'invention ;

[Fig. 5] représente un réseau de neurones selon un mode de réalisation de l'invention ;

[Fig. 6] représente des étapes d'un procédé d'optimisation d'un réseau de neurones, selon un mode de réalisation de l'invention ;

[Fig. 7] représente des étapes d'un procédé de guidage d'un aéronef autonome, selon un mode de réalisation de l'invention ; et

[Fig. 8] représente un exemple d'architectures d'un dispositif de guidage mettant en oeuvre un procédé de guidage, selon un mode de réalisation de l'invention.

Description détaillée

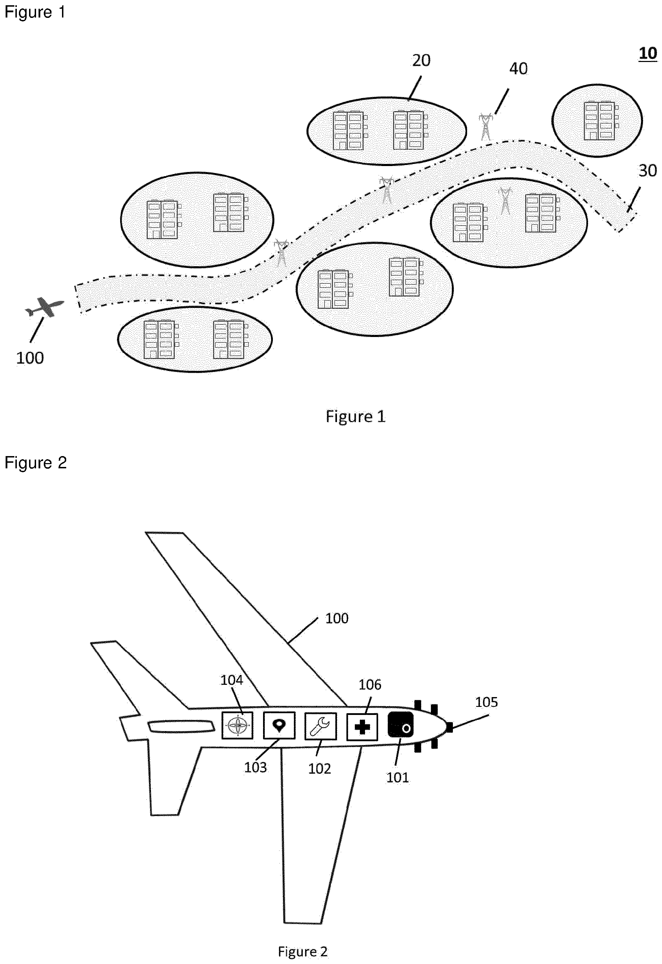

La figure 1 représente un système de surveillance 10 comprenant un aéronef autonome 100 équipé d'une unité d'imagerie 101 selon des modes de réalisation de l'invention. Le système de surveillance 10 peut être configuré pour surveiller une zone géographique comprenant un ou plusieurs objets d'intérêt 40 à photographier.

La zone géographique peut comprendre une ou plusieurs zones interdites au survol 20 dans lesquelles un survol de l'aéronef autonome 100 est interdit. Une zone interdite au survol 20 peut être, par exemple et de manière non limitative, une zone résidentielle, une zone industrielle ou un aéroport. Chaque zone interdite au survol 20 peut être associée à une géométrie tridimensionnelle (3D) et à des coordonnées 3D définies par rapport à un repère donné de mesure. La géométrie 3D peut par exemple être un polyèdre, un cylindre, ou toute autre forme 3D.

La zone géographique peut en outre comprendre un ou plusieurs couloirs de sécurité 30 définissant des sous-zones que l'aéronef autonome 100 est autorisé à survoler. Un couloir de sécurité 30 peut être configuré de manière à ne pas traverser les zones interdites au survol 20. Un couloir de sécurité 30 peut par exemple, et de manière non limitative, correspondre à une route, à un fleuve ou à une plage. Un couloir de sécurité 30 peut être configuré de manière à définir une trajectoire entre une position de départ et une position d'arrivée. Ainsi, l'aéronef autonome 100 peut atteindre la position d'arrivée tout en restant dans le couloir de sécurité 30.

La zone géographique peut en outre comprendre un ou plusieurs objets d'intérêt 40 pouvant être photographiés par l'unité d'imagerie 101 équipant l'aéronef autonome 100. Un objet d'intérêt 40 peut appartenir à une zone interdite au survol 20 ou appartenir au couloir de sécurité 30, par exemple. Les objets d'intérêt 40 peuvent être tout type d'objets comme par exemple des pylônes, des arbres ou des véhicules. Un objet d'intérêt 40 peut être modélisé par une géométrie 3D associées à des coordonnées 3D définies par rapport à un repère donné de mesure. En outre, un marquage identifiant le type de l'objet d'intérêt 40 peut être associé à chaque objet d'intérêt 40 à photographier.

L'aéronef autonome 100 peut être par exemple un drone à voilure fixe ou un drone multi-rotors. Les drones à voilure fixe présentent des vibrations moindres et une consommation réduite d'énergie par rapport aux drones multi-rotors. L'homme du métier comprendra néanmoins que l'invention n'est pas limitée aux drones à voilure fixe.

La figure 2 représente un aéronef autonome 100 à voilure fixe selon un mode de réalisation de l'invention.

L'aéronef autonome 100 peut comprendre une unité de localisation 103 capable de déterminer la localisation de l'aéronef automne dans un repère donné de mesure en retournant les coordonnées tridimensionnelles de l'aéronef, l'unité de localisation 103 pouvant être par exemple de type GPS (Global Positioning System). L'aéronef autonome 100 peut comprendre une centrale inertielle 104 configurée pour déterminer l'attitude (angles de roulis, de tangage et de cap) de l'aéronef autonome 100 dans le repère donnée de mesure. L'aéronef autonome 100 peut en outre comprendre un capteur de vitesse et un capteur d'orientation (non représentés sur la figure 2) configurés respectivement pour déterminer la vitesse instantanée et l'orientation de l'aéronef autonome 100 dans le repère donnée de mesure.

Avantageusement, l'aéronef autonome 100 peut en outre comprendre un ou plusieurs capteurs de position 105 agencés sur sa surface extérieure, à différents emplacements, chaque capteur de position 105 étant configuré pour détecter des obstacles susceptibles de provoquer une collision impliquant l'aéronef autonome 100 et pour déterminer la distance séparant l'aéronef autonome 100 de chaque obstacle détecté. Les capteurs de position 105 peuvent en outre être configurés pour identifier la nature des obstacles détectés. Dans un mode de réalisation, les capteurs de position 105 peuvent par exemple être agencés de manière uniforme et symétrique autour du nez de l'aéronef automne. Le nombre de capteurs de position 105 peut par exemple être impair en positionnant l'un d'eux selon l'axe longitudinal de l'aéronef automne. En outre, les capteurs de position 105 peuvent être configurés pour retourner une valeur négative, par exemple -1, en cas de non détection d'obstacles.

L'aéronef autonome 100 peut en outre comprendre un capteur d'objets d'intérêt 40 (non représenté sur la figure 2) configuré pour détecter des objets d'intérêt 40 et pour déterminer la position relative de chaque objet d'intérêt 40 détecté par rapport à la position instantanée de l'aéronef autonome 100. Une telle position relative peut être représentée par un angle et une distance séparant l'aéronef autonome 100 de l'objet d'intérêt 40 détecté. Alternativement, les coordonnées dans un repère donné de mesure des objets d'intérêt 40 peuvent être sauvegardées de manière préalable par le capteur d'objets d'intérêt 40. Dans ce cas, le capteur d'objets d'intérêt 40 peut être configuré pour déterminer la position relative de chaque objet d'intérêt 40 à partir des coordonnées de l'objet d'intérêt 40 et de la position instantanée de l'aéronef autonome 100 telle que fournie par l'unité de localisation 103 décrite ci-dessus.

L'aéronef autonome 100 peut en outre comprendre un pilote automatique 102 configuré pour exécuter une loi de guidage et pour mettre en oeuvre des consignes de commande reçues, selon la loi de guidage exécutée, par actionnement sur des éléments de l'aéronef autonome 100 tels que son moteur et ses gouvernes qui agissent respectivement sur la vitesse et sur l'attitude de l'aéronef autonome 100.

L'aéronef autonome 100 peut aussi comprendre une unité d'imagerie 101 qui peut être fixée de manière rigide sur l'aéronef. L'unité d'imagerie 101 peut être associée à un ensemble de paramètres opto-géométriques tels que la distance focale, l'angle de champ et l'orientation qui peuvent être fixes au cours du temps. Dans ce cas, l'unité d'imagerie 101 peut être orientée vers l'avant, selon l'axe longitudinal de l'aéronef autonome 100. Alternativement, un ou plusieurs paramètres opto-géométriques de l'unité d'imagerie 101 peuvent être ajustés au cours du temps. Par exemple, l'orientation et la distance focale de l'unité d'imagerie 101 peuvent être ajustées au cours du temps. Par ailleurs, l'unité d'imagerie 101 peut être configurée pour recevoir des consignes de prise de vue destinées à activer la prise de vue photographique d'un objet d'intérêt 40 se trouvant dans son champ de vision. Les consignes de prise de vue photographique peuvent comprendre, pour une unité d'imagerie 101 à paramètres opto-géométriques ajustables, les valeurs de tels paramètres ajustables.

L'aéronef autonome 100 peut en outre comprendre une unité de stockage (non représentée sur la figure 2) configurée pour sauvegarder de manière permanente, c'est-à-dire non volatile, des données de nature géographique liées à la position et à la forme géométrique des éléments comprenant les zones interdites au survol 20, le couloir de sécurité 30 et/ou les objets d'intérêt 40 à photographier.

Avantageusement, l'aéronef autonome 100 peut en outre comprendre un dispositif de guidage 106 configuré pour communiquer avec des éléments de l'aéronef autonome 100 comprenant le pilote automatique 102, l'unité de stockage, l'unité d'imagerie 101 et les capteurs équipant l'aéronef autonome 100 (unité de localisation 103, centrale inertielle 104, capteur de vitesse, capteur d'orientation, capteurs de position 105, capteur d'objets d'intérêt 40, etc.). Le dispositif de guidage 106 peut être configuré pour déterminer, à un instant donné pendant le vol de l'aéronef autonome 100, un état courant de l'aéronef autonome 100 qui peut être décrit en relation avec les éléments extérieurs comprenant le couloir de sécurité 30, les zones interdites au survol 20, les obstacles susceptibles de provoquer des collisions, des objets d'intérêt 40 à photographier, etc. De tels éléments extérieurs forment l'environnement 200 de l'aéronef autonome 100. Avantageusement, le dispositif de guidage 106 peut en outre être configuré pour régir l'interaction entre l'aéronef autonome 100 est son environnement 200 en agissant sur le comportement (attitude et vitesse) de l'aéronef autonome 100.

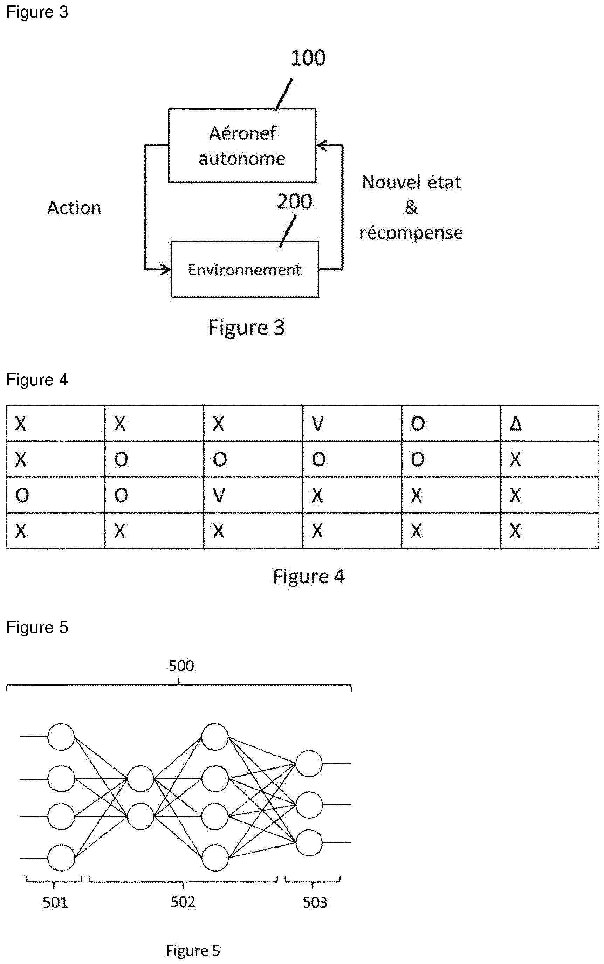

La figure 3 illustre l'interaction entre l'aéronef autonome 100 et son environnement 200 telle que régie par le dispositif de guidage 106, selon un mode de réalisation de l'invention. Dans ce cas, le dispositif de guidage 106 peut en outre être configuré pour déterminer, à un instant donné pendant le vol de l'aéronef autonome 100, une action à exécuter parmi un ensemble d'actions possibles, l'action à exécuter pouvant être arbitraire ou dépendante de l'état courant de l'aéronef autonome 100. Une telle action à exécuter peut par exemple consister à changer le cap de l'aéronef autonome 100 de 10 degrés et/ou à augmenter la vitesse de 30%. Un tel changement dans le comportement (attitude et vitesse) est perceptible par les différents capteurs équipant l'aéronef autonome 100 qui permettent au dispositif de guidage 106 de déterminer un nouvel état de l'aéronef automne dans son environnement, ainsi qu'une récompense associée, appelé aussi paramètre de récompense. La récompense peut par exemple être à valeurs réelles, une récompense négative étant représentative d'une « punition ». Par exemple, la récompense peut être égale à 0.5 ou à -0.5 selon que le nouvel état correspond à un aéronef restant dans le couloir de sécurité 30 ou correspond à un aéronef sortant du couloir de sécurité 30. Dans un autre exemple, la récompense peut être égale à 1 si le nouvel état permet à l'aéronef autonome 100 de photographier un objet d'intérêt 40 en restant dans le couloir de sécurité 30 et peut être égale à 2 si le nouvel état permet à l'aéronef autonome 100 d'atteindre la position d'arrivée en restant dans le couloir de sécurité 30. L'action exécutée par l'aéronef autonome 100 peut par exemple être qualifiée d' « optimale » si elle correspond à une récompense maximale. L'interaction entre l'aéronef autonome 100 et son environnement 200 telle que régie par le dispositif de guidage 106 peut être itérative où chaque itération est représentative d'une étape du vol de l'aéronef autonome 100. Le vol de l'aéronef autonome 100 peut donc être assimilé à un épisode correspondant à une suite d'étapes où chaque étape est représentée par un état, une action et une récompense.

La figure 4 illustre, à simple titre d'exemple, une représentation de l'environnement 200 dans lequel l'aéronef autonome 100 peut évoluer. Les colonnes de la matrice de la figure 4 représentent des étapes d'un épisode, c'est-à-dire d'un vol de l'aéronef autonome 100 entre une position de départ et une position d'arrivée. Les cases de la matrice de la figure 4 représentent les états dans lesquels l'aéronef autonome 100 peut se retrouver. Par souci de simplification, seuls quatre états sont considérés dans l'exemple de la figure 4 et comprennent :

- un premier état correspondant à un aéronef automne à l'extérieur du couloir de sécurité 30, le premier état étant schématisé par le signe de multiplication « X » et associé à une récompense égale à -0.5, par exemple ;

- un deuxième état correspondant à un aéronef autonome 100 à l'intérieur du couloir de sécurité 30, le deuxième état étant schématisé par un cercle « O » et associé à une récompense égale à 0.5, par exemple ;

- un troisième état correspondant à un aéronef autonome 100 à l'intérieur du couloir de sécurité 30 et photographiant un objet d'intérêt 40, le troisième état étant schématisé par la lettre « V » et associé à une récompense égale à 0.5, par exemple ;

- un quatrième état correspondant à un aéronef autonome 100 atteignant la position d'arrivée, le quatrième état étant schématisé par un triangle et associé à une récompense égale à 2, par exemple ;

Dans l'exemple simplifié de la figure 4, l'aéronef autonome 100 peut disposer d'un ensemble de trois actions possibles consistant à se déplacer à gauche, à droite ou vers l'avant.

Dans des modes de réalisation de l'invention, le dispositif de guidage 106 de l'aéronef autonome 100 peut être configuré pour déterminer une stratégie optimale, appelée aussi politique optimale, permettant de choisir, en relation avec chaque état courant de l'aéronef autonome 100, une action optimale à exécuter.

Avantageusement, la détermination de la stratégie optimale peut s'effectuer pendant une phase d'apprentissage préalable à la phase du vol réel de l'aéronef autonome 100. La phase d'apprentissage peut s'effectuer en utilisant des vols fictifs de l'aéronef automne réalisés dans des environnements 200 également fictifs qui peuvent ne pas être identiques à l'environnement 200 réel dans lequel l'aéronef automne évoluera, chaque environnement 200 fictif étant représentatif d'un scénario.

Dans des modes de réalisation de l'invention, la stratégie peut être représentée par une fonction de valeur action-état, noté $Q[s, a]$, qui détermine le gain potentiel, appelé aussi la valeur d'action, c'est-à-dire la somme pondérée des récompenses de chaque étape future à partir de l'état courant, apporté par le fait d'effectuer une certaine action a dans un certain état s. Lorsque la fonction de valeur $Q[s, a]$ est apprise, c'est-à-dire optimisée, par le dispositif de guidage 106 de l'aéronef autonome 100, la stratégie optimale peut être obtenue en sélectionnant l'action à valeur maximale pour chaque état, c'est-à-dire en sélectionnant l'action a qui maximise la valeur $Q[s, a]$ quand l'aéronef autonome 100 se trouve dans l'état s. En outre, la fonction de valeur action-état peut être représentée par un tableau, appelé aussi Q-table, dans lequel chaque état possible est associée à une ligne et chaque action possible est associée à une colonne. Dans le Q-table, la valeur de chaque case représente la valeur de la fonction de valeur état-action pour le couple d'état-action associé. Les éléments d'une Q-table peuvent être initiés à des valeurs arbitraires et ensuite optimisés en utilisant un algorithme d'apprentissage machine par renforcement donné.

Avantageusement, l'optimisation d'une fonction de valeur action-état représentée par une Q-table peut être effectuée en utilisant un algorithme d'apprentissage par renforcement de type « Q-Learning ». Dans ce cas, la définition de la fonction de valeur action-état peut être mise à jour après chaque étape d'un vol fictif (épisode) de l'aéronef autonome 100 selon la relation suivante :

$$Q[s, a] = (1 - \alpha)Q[s, a] + \alpha(r + \gamma \max_a Q[s', a]) \qquad (1)$$

où s et s' représentent respectivement le nouvel état et l'état courant, a représente l'action exécutée, r représente la récompense reçue, $\alpha$ est un facteur d'apprentissage compris entre 0 et 1, et $\gamma$ est un facteur d'actualisation. La relation (1) permet donc de remplacer la valeur d'une case de la Q-table par une autre valeur en fonction de la récompense reçue.

Par ailleurs, le choix de l'action à exécuter a peut s'effectuer selon une approche spécifiée par la stratégie Q[s, a]. Une telle approche peut par exemple être de type $\varepsilon$-greedy ($\varepsilon \in [0,1]$) selon laquelle l'aéronef autonome 100 tire aléatoirement un nombre compris entre 0 et 1. Si ce nombre est inférieur au coefficient $\varepsilon$, l'aéronef va explorer son environnement 200 en choisissant une action arbitraire ; dans le cas contraire il va exploiter les informations de la fonction de valeur action-état. Avantageusement, la valeur de $\varepsilon$ peut être constante pour toutes les étapes d'un épisode et peut décroitre en passant d'un épisode à un autre épisode. Par exemple, la mise à jour de la fonction de valeur action-état en relation avec le premier vol fictif de l'aéronef autonome 100 peut s'effectuer à un coefficient $\varepsilon$ égal à 1. Ceci correspond à une phase d'exploration pendant laquelle l'aéronef autonome 100 choisit des actions aléatoires comme il ne connaît pas son environnement 200. Par ailleurs, lorsque la valeur du coefficient $\varepsilon$ est proche de zéro, par exemple sensiblement égale à 0.05, l'aéronef autonome 100 peut utiliser la fonction de valeur action-état telle que mise à jour pour choisir l'action optimale ayant le gain potentiel maximal. Ceci correspond à une phase d'exploitation pendant laquelle l'aéronef autonome 100 exploite la connaissance sur son environnement 200.

Alternativement, l'optimisation d'une fonction de valeur action-état représentée par une Q-table peut être effectuée en utilisant un algorithme d'apprentissage par renforcement de type « Double Q-learning ». Une telle variante de l'algorithme « Q-learning » permet d'accélérer la convergence de la stratégie en mettant en oeuvre deux fonctions de valeur action-état dont la mise à jour s'effectue de manière croisée selon les deux relations suivante :

$$Q^A[s, a] = Q^A[s, a] + \alpha(r + \gamma Q^B[s', \arg\max_a Q^A[s', a]] - Q^A[s, a]) \qquad (2)$$

$$Q^B[s, a] = Q^B[s, a] + \alpha(r + \gamma Q^A[s', \arg\max_a Q^B[s', a]] - Q^B[s, a]) \qquad (3)$$

Dans d'autres modes de réalisation de l'invention, le nombre d'états dans lesquels l'aéronef autonome 100 peut se retrouver peut être très élevé, voire infini. En effet, chaque combinaison possible des informations d'entrée fournies par les capteurs équipant l'aéronef autonome 100 définit un état courant différent. Il est donc clair qu'une représentation de la fonction de valeur action-état selon un format matriciel tel que décrit ci-dessus peut être complexe en termes de puissance de calcul et en termes de ressources en mémoire. Avantageusement, la fonction de valeur action-état peut être représentée, de manière approximative, par un réseau de neurones 500 profond afin de répondre à la problématique de la taille élevée de l'espace des états de l'aéronef autonome 100. Dans ce cas, le réseau de neurones 500 peut être formé de plusieurs couches comprenant chacune un ou plusieurs neurones où chaque neurone d'une couche donnée est connecté à tous les neurones de la couche précédente et à tous les neurones de la couche suivante, tel qu'illustré sur la figure 5, la connexion entre deux neurones étant associée à un poids donné. Le réseau de neurones 500 comprend une couche d'entrée 501 comprenant plusieurs neurones où chaque neurone reçoit une information d'entrée, encore appelée paramètre d'entrée. L'information d'entrée peut être directement fournie par un capteur équipant l'aéronef autonome 100 ou calculée à partir des informations fournies par un ou plusieurs capteurs et/ou fournies par l'unité de stockage équipant l'aéronef autonome 100. Le réseau de neurones 500 peut comprendre plusieurs couches intermédiaires 502, chacune d'elles étant formée d'une ou de plusieurs neurones. Le réseau de neurones 500 comprend en outre une couche de sortie 503 comprenant plusieurs neurones où chaque neurone correspond à une action possible que l'aéronef autonome 100 peut entreprendre. Le nombre d'actions possibles peut avantageusement dépendre de la loi de guidage mise en oeuvre.

Par ailleurs, l'optimisation d'une fonction de valeur action-état représentée par un réseau de neurones 500 revient à optimiser les paramètres du réseau de neurones 500, c'est-à-dire les poids du réseau de neurones 500, en utilisant plusieurs vols fictifs de l'aéronef autonome 100.

Avantageusement, l'optimisation d'une fonction de valeur action-état représentée par un réseau de neurones 500 peut être effectuée en utilisant un algorithme d'apprentissage machine par renforcement de type « Deep Q-Learning ». Selon un tel algorithme d'apprentissage machine, les paramètres du réseau de neurones 500, représentés par un vecteur noté $\theta$, sont initialisés avec des poids aléatoires avant d'être mis à jour après chaque étape d'un vol fictif par descente de gradient stochastique en utilisant la fonction de coût suivante :

$$L[\theta] = [Q[s, a; \theta] - (r + \gamma \max_a Q[s', a; \theta])]^2 \qquad (4)$$

où Q[s, a; 0] représente la valeur de Q[s, a] estimée avec le réseau de neurones 500 et (r + γ max$_a$ Q[s', a; θ]) représente la valeur visée. Dans la relation (4), un même réseau de neurones 500 est utilisé pour sélectionner l'action et pour calculer la valeur visée.

Alternativement, l'optimisation d'une fonction de valeur action-état représentée par un réseau de neurones 500 peut être effectuée en utilisant un algorithme d'apprentissage machine par renforcement de type «Double Deep Q-Learning ». Une telle variante de l'algorithme «Deep Q-Learning » présente l'avantage de séparer la sélection de l'action qui maximise la valeur de la fonction Q[s, a] de son évaluation en utilisant deux réseaux de neurones distincts :

- un premier réseau de neurones 500 pour la sélection de l'action à exécuter, noté réseau « Q » ;

- un deuxième réseau de neurones 500 pour l'évaluation de l'action exécutée, noté réseau « Q-cible ».

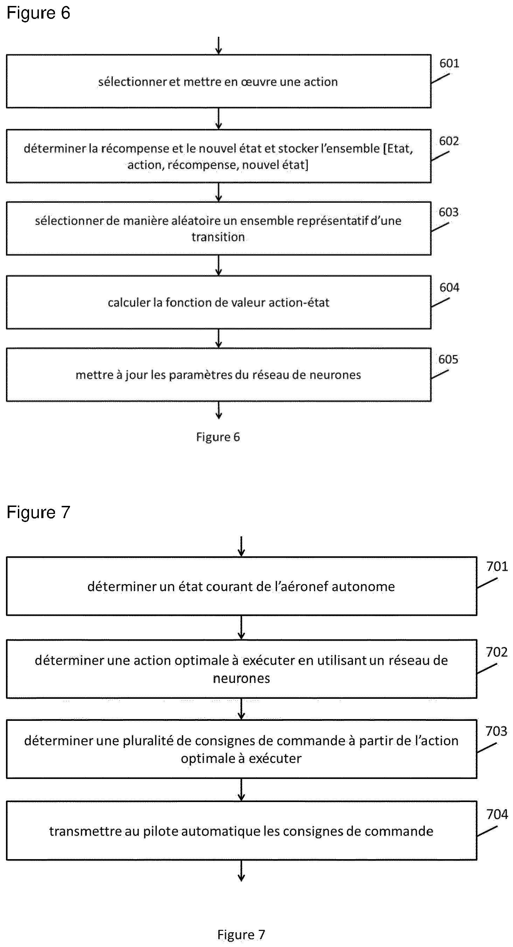

La figure 6 représente des étapes mises en oeuvre dans l'optimisation d'une fonction de valeur action-état représentée par un réseau de neurones 500 en utilisant un algorithme d'apprentissage machine par renforcement de type «Double Deep Q-Learning », selon un mode de réalisation de l'invention. De telles étapes sont décrites en relation avec une étape d'un vol fictif de l'aéronef autonome 100 et sont mises en oeuvre de manière récursive après une étape d'initialisation, chaque itération étant associée à une étape d'un vol fictif de l'aéronef autonome 100.

L'étape d'initialisation (non représentée sur la figure 6) consiste à initialiser une mémoire de reprise dont la capacité est préalablement définie. L'étape d'initialisation consiste en outre à initialiser les paramètres des deux réseaux de neurones, réseau « Q » et réseau « Q-cible », avec des poids aléatoires, $\theta^Q_{INI}$ pour le réseau « Q » et $\theta^{Q-cible}_{INI}$ pour le réseau « Q-cible ».

Avantageusement, une étape d'observation (non représentée sur la figure 6) peut être mise en oeuvre au début de chaque nouvel épisode avant la mise en oeuvre de la première itération des étapes 601 à 605 relatives à la première étape du nouvel épisode. L'étape d'observation consiste à observer l'état initial de l'aéronef autonome 100.

A l'étape 601, l'aéronef autonome 100 peut sélectionner et mettre en oeuvre une action selon une approche donnée qui peut être de type ε-greedy telle que décrite ci-dessus.

A l'étape 602, l'aéronef autonome 100 peut déterminer la récompense et le nouvel état à partir des informations fournies par les capteurs et/ou par l'unité de stockage équipant l'aéronef autonome 100. L'étape 602 peut en outre consister à stocker dans la mémoire de reprise la transition représentée par un ensemble formé par l'état courant, l'action exécutée, la récompense reçue et le nouvel état.

A l'étape 603, l'aéronef autonome 100 peut sélectionner de manière aléatoire un ensemble représentatif d'une transition à partir des ensembles stockés dans la mémoire de reprise.

A l'étape 604, l'aéronef autonome 100 peut calculer la fonction de valeur action-état $Q\big[s, a; \theta^Q_{ACTUEL}\big]$ en utilisant le réseau de neurones 500 « Q ». En outre, l'aéronef autonome 100 peut calculer ( $r + \gamma \max_a Q\big[s', a; \theta^{Q-cible}_{ACTUEL}\big]$ ) en utilisant le réseau de neurones 500 « Q-cible ».

A l'étape 605, l'aéronef autonome 100 peut mettre à jour les paramètres du réseau de neurones 500 par descente de gradient stochastique en utilisant la fonction de coût suivante :

$$L[\theta] = \Big[Q\big[s, a; \theta^Q_{ACTUEL}\big] - \big(r + \gamma \max_a Q\big[s', a; \theta^{Q-cible}_{ACTUEL}\big]\big)\Big]^2 \qquad (5)$$

Avantageusement, une étape de clonage (non représentée sur la figure 6) peut être mise en oeuvre de manière régulière, par exemple après la fin d'un épisode donné. L'étape de clonage peut consister à utiliser les paramètres du réseau de neurones 500 « Q » pour mettre à jour les paramètres du réseau de neurones 500 « Q-cible ».

De manière générale, tout algorithme d'apprentissage machine par renforcement peut être utilisé pour optimiser la fonction de valeur action-état mise en oeuvre dans le dispositif de guidage 106, la fonction de valeur pouvant être représentée par une Q-table ou avantageusement représentée par un réseau de neurones 500. Des exemples d'algorithme d'apprentissage machine par renforcement incluent, à titre d'exemple non limitatif, la méthode de « Monte Carlo », l'algorithme « Temporal-Difference Learning » ou l'algorithme de « Recherche Exhaustive ».

Dans un mode de réalisation de l'invention, un paramètre de complexité peut être associé à chaque vol fictif de l'aéronef autonome 100, le vol fictif étant effectué dans un environnement 200 fictif. Le paramètre de complexité peut par exemple représenter le nombre de virages dans le couloir de sécurité 30 associé à l'environnement 200 fictif.

Avantageusement, la sélection des environnements 200 fictifs utilisés dans la phase d'apprentissage peut se faire selon un ordre croissant des paramètres de complexité, c'est-à-dire en commençant par les environnements 200 présentant des faibles paramètres de complexité.

Dans un autre exemple de réalisation non limitatif, la phase d'apprentissage peut être initiée par un vol fictif associé à un paramètre de complexité défini à partir d'un ou plusieurs virages présents dans le couloir de sécurité 30 et/ou d'un ou plusieurs objets d'intérêt 40. La phase d'apprentissage peut alors se poursuivre progressivement en montant en complexité (par ordre croissant de paramètres de complexité associés aux vols fictifs), en ajoutant d'autres virages, dans le couloir de sécurité 30, d'autres objets d'intérêt 40, et de façon générale d'autres éléments définissant une contrainte de guidage pour l'aéronef dans le couloir de sécurité 30.

Dans un autre mode de réalisation de l'invention, la stratégie peut directement être représentée par une fonction déterminant pour chaque état courant une action optimale à exécuter. Une telle fonction peut par exemple être représentée par un réseau de neurones 500 tel que décrit ci-dessus. Avantageusement, le réseau de neurones 500 peut dans ce cas être optimisé en utilisant un algorithme d'apprentissage machine par renforcement de type « Proxima Policy Optimization ». Avantageusement, le réseau de neurones 500 peut dans ce cas être un réseau de neurones 500 récurrents.

La figure 7 représente des étapes d'un procédé de guidage d'un aéronef autonome 100 selon un mode de réalisation de l'invention. De telles étapes sont mises en oeuvre par le dispositif de guidage 106 d'un aéronef automne 100 mettant en oeuvre un réseau de neurones 500 déterminé et optimisé pendant une phase d'apprentissage préalable selon l'un des modes de réalisation de l'invention décrits ci-dessus. Les étapes de la figure 7 sont mises en oeuvre à un instant donné du vol de l'aéronef autonome 100.

A l'étape 701, le dispositif de guidage 106 peut déterminer l'état courant de l'aéronef autonome 100 à partir des informations fournies par les capteurs équipant l'aéronef autonome 100 et/ou par son unité de stockage. Un tel état courant peut par exemple comprendre la position, la vitesse et l'attitude l'aéronef autonome 100, la position relative d'un objet d'intérêt 40 à photographier, les distances séparant l'aéronef autonome 100 des obstacles détectés, etc.

A l'étape 702, le dispositif de guidage 106 peut déterminer une action optimale à exécuter en utilisant le réseau de neurones 500 préalablement déterminé et optimisé. Le réseau de neurones 500 utilise comme entrée l'état courant de l'aéronef autonome 100 tel que déterminé à l'étape 701 et fournit une action optimale que l'aéronef autonome 100 peut entreprendre.

A l'étape 703, le dispositif de guidage 106 peut déterminer plusieurs consignes de commande destinées au pilote automatique 102 équipant l'aéronef autonome 100 à partir de l'action optimale obtenue à l'étape 702. Ainsi, l'action optimale est transformée en une pluralité de consignes de commande. L'étape 703 peut s'effectuer en fonction de la loi de guidage mise en oeuvre dans le pilote automatique 102.

A l'étape 704, le dispositif de guidage 106 peut transmettre au pilote automatique 102 les consignes de commander afin de modifier le comportement de l'aéronef autonome 100 en termes de vitesse et/ou en termes d'attitude, ce qui fournit un nouvel état de l'aéronef autonome 100.

Dans des modes de réalisation de l'invention, les étapes 702 et 703 peuvent être combinées en une seule étape de manière à ce que le réseau de neurones 500 détermine, à partir de l'état courant reçu, les consignes de commande destinées au pilote automatique 102 équipant l'aéronef autonome 100.

Avantageusement, le procédé de guidage peut en outre comprendre une étape supplémentaire (non représentée sur la figure 7) consistant à transmettre à l'unité d'imagerie 101 une consigne de prise de vue photographique si le nouvel état de l'aéronef autonome 100 permet de photographier un ou plusieurs objets d'intérêt 40.

Dans un mode de réalisation de l'invention, l'aéronef autonome 100 est de type aéronef autonome 100 à voilure fixe et la loi de guidage mise en oeuvre pour modifier le comportement de l'aéronef autonome 100 peut être choisie parmi les lois suivantes :

- une loi de capture et de tenue de cap, par action sur des gouvernes des ailerons de l'aéronef autonome 100 ;

- une loi de capture et de tenue de route par action sur des gouvernes des ailerons de l'aéronef autonome 100 ;

- une loi de capture et de tenue d'altitude par action sur la poussée du moteur ou sur des gouvernes de profondeur de l'aéronef autonome 100 ;

- une loi de capture et de tenue de vitesse par action sur la poussée du moteur de l'aéronef autonome 100.

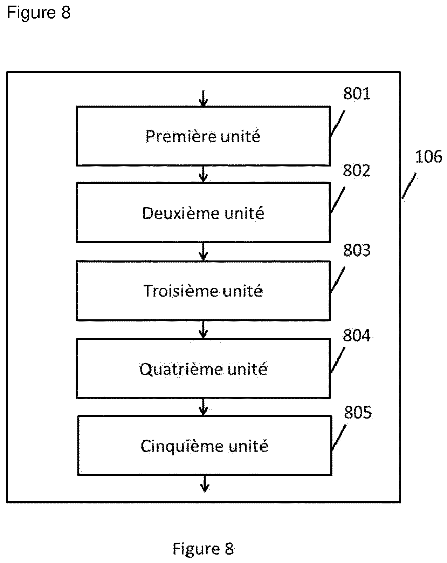

La figure 8 représente l'architecture d'un dispositif de guidage 106 mis en oeuvre dans un aéronef autonome 100 selon un mode de réalisation de l'invention. Le dispositif de guidage 106 peut comprendre :

- une première unité 801 apte à déterminer l'état courant de l'aéronef autonome 100 à partir des informations fournies par les capteurs utilisés et/ou des informations fournies par l'unité de stockage équipant l'aéronef autonome 100 ;

- une deuxième unité 802 apte à déterminer une action optimale à exécuter en utilisant un réseau de neurones 500 préalablement déterminé et optimisé ;

- une troisième unité 803 apte à déterminer plusieurs consignes de commandes destinées au pilote automatique 102 à partir de l'action optimale à exécuter ;

- une quatrième unité 804 apte à transmettre au pilote automatique 102 les consignes de commander afin de modifier le comportement de l'aéronef autonome 100.

Le dispositif de guidage 106 est avantageusement configuré pour mettre en oeuvre une phase préalable d'apprentissage pour optimiser le réseau de neurones 500 à partir d'une pluralité de vols fictifs de l'aéronef, chacun des vols fictifs comprenant une succession d'étapes fictives.

Le dispositif de guidage 106 peut en outre comprendre une cinquième unité 805 apte à transmettre à l'unité d'imagerie 101 des consignes de prise de vue photographique.

Les modes de réalisation de l'invention peuvent s'appliquer avantageusement à un aéronef autonome 100 de type drone à voilure fixe équipé d'une unité d'imagerie 101 à paramètres opto-géométriques fixes au cours du temps. Ceci permet d'augmenter la durée du vol et de couvrir des zones géographiques plus étendues que les solutions de l'état de la technique.

L'homme du métier comprendra que le procédé de guidage selon les modes de réalisation peut être mis en oeuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

L'invention n'est pas limitée aux modes de réalisation décrits ci-avant à titre d'exemple non limitatif. Elle englobe toutes les variantes de réalisation qui pourront être envisagées par l'homme du métier.

## Revendications

1.  Procédé de guidage d'un aéronef autonome (100), l'aéronef comprenant un pilote automatique (102), une pluralité de capteurs et une unité d'imagerie (101), l'aéronef étant configuré pour survoler une zone géographique comprenant des zones interdites au survol (20) et un couloir de sécurité (30) ne traversant pas lesdites zones interdites au survol (20), ladite unité d'imagerie (101) étant apte à photographier un ou plusieurs objets d'intérêt (40) se trouvant dans ladite zone géographique, **caractérisé en ce que** le procédé de guidage comprend une phase de vol réel de l'aéronef autonome (100) entre une position de départ et une position d'arrivée prédéfinie associées audit couloir de sécurité (30), en utilisant une loi de guidage donnée, le procédé de guidage comprenant les étapes suivantes, mises en oeuvre à un instant donné de ladite phase de vol réel :

    - déterminer (701) un état courant dudit aéronef autonome (100) en fonction d'une pluralité de paramètres d'entrée comprenant des paramètres d'entrée fournis par ladite pluralité de capteurs ;
    - déterminer (702) une action optimale à exécuter en utilisant un réseau de neurones (500) recevant ledit état courant ;
    - déterminer (703) une pluralité de consignes de commande compatibles avec ladite loi de guidage à partir de ladite action optimale à exécuter ;
    - transmettre (704) audit pilote automatique (102) ladite pluralité de consignes de commande, ce qui fournit un nouvel état dudit aéronef autonome (100) ;

    ledit réseau de neurones (500) représentant une fonction de valeur, ladite fonction de valeur associant à chaque état courant une ou plusieurs actions, chacune desdites actions étant associées à une valeur d'action représentative d'une somme attendue de paramètres de récompense, ladite action optimale à exécuter étant associée à une valeur d'action maximale, lesdits paramètres de récompense étant maximaux si le nouvel état correspond à :

    - un état indiquant que l'aéronef autonome (100) reste dans le couloir de sécurité (30) ;

- un état indiquant que l'unité d'imagerie (101) photographie au moins un objet d'intérêt (40) ;
- un état où l'aéronef autonome (100) atteint une position d'arrivée prédéfinie, **en ce que** lesdits paramètres de récompense sont minimaux si le nouvel état correspond à un état indiquant une sortie de l'aéronef autonome (100) du couloir de sécurité (30),

et **en ce que** le procédé comprend une phase préalable d'apprentissage consistant à optimiser ledit réseau de neurones (500) à partir d'une pluralité de vols fictifs dudit aéronef, chacun desdits vols fictifs comprenant une succession d'étapes fictives.

2. Procédé de guidage selon la revendication 1, **caractérisé en ce qu'**il comprend une étape supplémentaire consistant à transmettre à ladite unité d'imagerie (101) des consignes de prise de vue photographique, si ledit nouvel état permet de photographier au moins un objet d'intérêt (40).

3. Procédé de guidage selon la revendication 1 ou 2, **caractérisé en ce que** ledit réseau de neurones (500) représente une stratégie associant à chaque état courant dudit aéronef autonome (100) une action optimale à exécuter.

4. Procédé de guidage selon l'une des revendications précédentes, **caractérisé en ce que** l'optimisation dudit réseau de neurones (500) à partir de ladite pluralité de vols fictifs est déterminée en utilisant un algorithme d'apprentissage machine par renforcement.

5. Procédé de guidage selon l'une des revendications précédentes, **caractérisé en ce que** ledit réseau de neurones (500) comprend une couche d'entrée (501) formée par une pluralité de neurones d'entrée, au moins un desdits neurones d'entrée recevant une information fournie par un desdits capteurs.

6. Procédé de guidage selon l'une des revendications précédentes, **caractérisé en ce que** chacun desdits vols fictifs est associé à un paramètre de complexité, lesdits vols fictifs étant utilisés dans ladite phase préalable d'apprentissage selon un ordre croissant desdits paramètres de complexité.

7. Procédé de guidage selon l'une des revendications précédentes, **caractérisé en ce que** ladite loi de guidage est une loi parmi :

- une loi de capture et de tenue de cap, par action sur des gouvernes des ailerons de l'aéronef autonome (100) ;
- une loi de capture et de tenue de route par action sur des gouvernes des ailerons de l'aéronef autonome (100) ;
- une loi de capture et de tenue d'altitude par action sur la poussée du moteur ou sur des gouvernes de profondeur de l'aéronef autonome (100) ;
- une loi de capture et de tenue de vitesse par action sur la poussée du moteur de l'aéronef autonome (100).

8. Dispositif de guidage (106) mis en oeuvre dans un aéronef autonome (100), l'aéronef comprenant un pilote automatique (102), une pluralité de capteurs et une unité d'imagerie (101), l'aéronef étant configuré pour survoler une zone géographique comprenant des zones interdites au survol (20) et un couloir de sécurité (30) ne traversant pas lesdites zones interdites au survol (20), ladite unité d'imagerie (101) étant apte à photographier un ou plusieurs objets d'intérêt (40) se trouvant dans ladite zone géographique, **caractérisé en ce que** le dispositif de guidage (106) comprend :

- une première unité (801) apte à déterminer un état courant dudit aéronef autonome (100) en fonction d'une pluralité de paramètres d'entrée comprenant des paramètres d'entrée fournis par ladite pluralité de capteurs ;
- une deuxième unité (802) apte à déterminer une action optimale à exécuter en utilisant un réseau de neurones (500) recevant ledit état courant ;
- une troisième unité (803) apte à déterminer une pluralité de consignes de commande compatibles avec ladite loi de guidage à partir de ladite action optimale à exécuter ;
- une quatrième unité (804) apte à transmettre audit pilote automatique (102) ladite pluralité de consignes de commande, ce qui fournit un nouvel état dudit aéronef autonome (100).

ledit réseau de neurones (500) représentant une fonction de valeur, ladite fonction de valeur associant à chaque état courant une ou plusieurs actions, chacune desdites actions étant associées à une valeur d'action représentative d'une somme attendue de paramètres de récompense, ladite action optimale à exécuter étant associée à une valeur d'action maximale, lesdits paramètres de récompense étant maximaux si le nouvel état correspond à :

- un état indiquant que l'aéronef autonome (100) reste dans le couloir de sécurité (30) ;
- un état indiquant que l'unité d'imagerie (101) photographie au moins un objet d'intérêt (40) ;
- un état où l'aéronef autonome (100) atteint une position d'arrivée prédéfinie,

**en ce que** lesdits paramètres de récompense sont minimaux si le nouvel état correspond à un état indiquant une sortie de l'aéronef autonome (100) du couloir de sécurité (30),

le dispositif de guidage (106) étant configuré pour mettre en oeuvre une phase préalable d'apprentissage pour optimiser ledit réseau de neurones (500) à partir d'une pluralité de vols fictifs dudit aéronef, chacun desdits vols fictifs comprenant une succession d'étapes fictives.

9. Dispositif de guidage selon la revendication 8, **caractérisé en ce qu'**il comprend une cinquième unité (805) apte à transmettre à l'unité d'imagerie (101) des consignes de prise de vue photographique.

10. Aéronef autonome (100), **caractérisé en ce qu'**il comprend un dispositif de guidage (106) configuré selon l'une des revendications 8 et 9.

Figure 1

Figure 1

Figure 2

Figure 2

Figure 3

Figure 3

Figure 4

| X | X | X | V | O | Δ |
|---|---|---|---|---|---|
| X | O | O | O | O | X |
| O | O | V | X | X | X |
| X | X | X | X | X | X |

Figure 4

Figure 5

Figure 5

## Figure 6

```
                    ↓
┌─────────────────────────────────────────────────────────┐
│        sélectionner et mettre en œuvre une action        │ ─── 601
└─────────────────────────────────────────────────────────┘
                    ↓
┌─────────────────────────────────────────────────────────┐
│ déterminer la récompense et le nouvel état et stocker    │ ─── 602
│    l'ensemble [Etat, action, récompense, nouvel état]    │
└─────────────────────────────────────────────────────────┘
                    ↓
┌─────────────────────────────────────────────────────────┐
│ sélectionner de manière aléatoire un ensemble            │ ─── 603
│        représentatif d'une transition                    │
└─────────────────────────────────────────────────────────┘
                    ↓
┌─────────────────────────────────────────────────────────┐
│        calculer la fonction de valeur action-état        │ ─── 604
└─────────────────────────────────────────────────────────┘
                    ↓
┌─────────────────────────────────────────────────────────┐
│     mettre à jour les paramètres du réseau de neurones   │ ─── 605
└─────────────────────────────────────────────────────────┘
                    ↓
```

Figure 6

## Figure 7

```
                    ↓
┌─────────────────────────────────────────────────────────┐
│     déterminer un état courant de l'aéronef autonome     │ ─── 701
└─────────────────────────────────────────────────────────┘
                    ↓
┌─────────────────────────────────────────────────────────┐
│ déterminer une action optimale à exécuter en utilisant   │ ─── 702
│              un réseau de neurones                       │
└─────────────────────────────────────────────────────────┘
                    ↓
┌─────────────────────────────────────────────────────────┐
│ déterminer une pluralité de consignes de commande à      │ ─── 703
│       partir de l'action optimale à exécuter             │
└─────────────────────────────────────────────────────────┘
                    ↓
┌─────────────────────────────────────────────────────────┐
│ transmettre au pilote automatique les consignes de       │ ─── 704
│                    commande                              │
└─────────────────────────────────────────────────────────┘
                    ↓
```

Figure 7

Figure 8

Figure 8

## RÉFÉRENCES CITÉES DANS LA DESCRIPTION

**Documents brevets cités dans la description**

- EP 2403757 A
- US 2009157233 A1